# EUROPEAN PATENT SPECIFICATION

(11) **EP 1 642 042 B1**
(45) Date of publication and mention of the grant of the patent: **27.12.2006**
(21) Application number: 04748623.8
(22) Date of filing: 02.06.2004
(51) Int. Cl.: F16G 5/16

(54) **METAL DRIVE BELT**
METALLTREIBRIEMEN
COURROIE D'ENTRAINEMENT EN METAL

(30) Priority: 16.06.2003 NL 1023667
(43) Date of publication of application: 05.04.2006
(73) Proprietor: ROBERT BOSCH GMBH, 70442 Stuttgart (DE)
(72) Inventor: PRINSEN, Lucas, Hendricus, Robertus, Maria, NL-7175 AC Loon Op Zand (NL); VAN DER MEER, Cornelis, Johannes, Maria, NL-5032 XG Tilburg (NL); VAN SCHAIK, Marco, NL-4817 KZ Breda (NL)
(74) Representative: Plevier, Gabriel Anton Johan Maria
(86) International application number: PCT/NL2004/000391
(87) International publication number: WO 2004/111490

(56) References cited:
- EP-A- 0 200 246
- EP-A- 0 381 258
- EP-A- 0 994 275
- EP-A- 1 158 204
- EP-A- 1 258 652
- GB-A- 1 549 403
- PATENT ABSTRACTS OF JAPAN vol. 006, no. 083 (M-130), 21 May 1982 (1982-05-21) & JP 57 022441 A (NISSAN MOTOR CO LTD), 5 February 1982 (1982-02-05)

## Description

The present invention relates to a metal drive belt for a continuously variable transmission as presented in the preamble of Claim 1.

Belts of this type are generally known, for example from patent publication GB 1549403, European patent publications EP-A-0 994 275 and EP-A-0 381 258. Metal belts for the continuously variable transmission function on the basis of frictional contact. For this purpose, the known belt is provided with lateral contact surfaces, i.e. flanks, for contact with the contact surfaces of the respective sheaves of a pair of sheaves, i.e. pulley, in which the belt is accommodated during operation. When a movement is being transmitted from one pulley to the other, the known belt is subject to considerable heat being evolved in the frictional contact, in particular on account of the very high torques which can be transmitted using a metal drive belt. Normally, therefore, metal belts operate in a lubricated, i.e. cooled environment. For this purpose, during operation they are generally sprayed from a radially inner position with a lubricant and/or coolant, such as transmission oil. The oil, which is constantly supplied freshly, cools the relevant contact surfaces and thereby contributes to at least as far as possible avoiding damage thereto. One possible instance of such damage is what is known as cold welding, i.e. a spontaneous local join between two metal parts resulting from the said evolution of heat. However, in practice it has been found that the cooling cannot always be optimum, and consequently welds of this type may still occur on a very local basis even when transmission oil is supplied. The cold welds are generally broken again immediately after they have formed under the force and dynamics acting on the belt, which causes an undesirable irregularity or wear either on the flank of a transverse element or at the contact surface of a pulley.

In order firstly to enable the cooling and/or lubrication provided by the transmission oil to be distributed as uniformly as possible and secondly to optimise the frictional contact between a transverse element and a pulley, the flanks of the known belt are designed with a profile for receiving a lubricant and/or coolant, such as the said transmission oil in the grooves of the profile. The result is transmission oil which, when a transverse element and a pulley come into contact, is forced out between the respective contact surfaces. If this forces motion does not occur or does not occur sufficiently quickly, an excessively thick layer of oil is formed between transverse element and pulley, and consequently the frictional contact between them is not optimum. Therefore, the oil has to be discharged easily and preferably over the shortest possible distance, to which end the said grooves are arranged in the flanks. On account of the fact that the grooves are oriented more or less in the longitudinal direction of the belt, i.e. the tangential direction, the oil accommodated therein remains more or less enclosed between the transverse element and pulley throughout the movement of the transverse element over a pulley.

With regard to the uptake of transmission oil, the said transverse elements with a profiled flank represented an improvement compared to the transverse element which is also known and the flanks of which were of roughened design. The latter are known, for example, from European patent publication EP-A-0 200 246, in which the flanks are blasted. The (sand) blasting produced the type of roughness in which the roughness peaks formed a sufficiently large surface area for frictional contact with the pulleys, while the space between the roughness peaks was intended to collect the said discharged oil. In practice, however, it was found that the roughness is such, and the surface area of the roughness peaks was of such a size, that it was not possible for the transmission oil to be discharged to a sufficient extent and/or sufficiently quickly under all circumstances. As a result, the film of oil in the said frictional contact was not always thin enough for optimum friction transmission. Moreover, the roughening or blasting of the flanks represented a relatively expensive and laborious production process.

Some of these drawbacks have been overcome by the said profiled flanks, in particular those provided with the so-called sinusoidal profile known from EP-A-0 994 275. In this way, good functionality of the frictional contact between the transverse element and the pulley is obtained, i.e. normally there is no excess of transmission oil in the said contact. An additional advantage of this transverse element is that the profile, while the transverse element is being formed from a base material, can generally be realised with the aid of a punching process, i.e. without the need for an additional working step, such as the aforesaid blasting.

Although the problem of discharging the oil has already largely been solved in the latter known drive belt, in practice, the said discharge of transmission oil has still proven inadequate under more or less extreme operating conditions, in particular at a relatively high (rotational) speed of the drive belt and the pulleys. According to the invention, this is caused to a significant extent by the fact that the oil between the drive belt and the pulley is more or less enclosed in the profile. Then, under certain circumstances, the volume formed by the grooves may be insufficient to collect the discharged oil, at least at a sufficient speed. This problem is exacerbated by the fact that under the influence of centrifugal force a centrifugal pressure is built up in the transmission oil where it is enclosed in the grooves, which pressure counteracts the discharge of the oil from the highest parts of the profile to the grooves thereof.

Therefore, the present invention is looking for a drive belt, as well as an advantageous process for producing it, in which the discharge of transmission oil from the frictional contact between the transverse element and the pulleys is optimum and in which, more particularly, the build-up of centrifugal pressure can be largely avoided. According to the invention, this is achieved by a belt in which at least the majority of the transverse elements are provided with the properties described in the characterizing clause of Claim 1.

With a design of the transverse element of this type, optimum discharge of the transmission oil which is present between the transverse element and a sheave of a pulley is achieved by virtue of the fact that, on account of the particular orientation of the radial recess in the lateral contact surface or flank of the transverse element, the oil is not retained, or at least can be discharged over an advantageously short distance between the transverse element and the sheave. Moreover, in the transverse element according to the invention the said inevitable centrifugal force is in fact exploited advantageously for the discharge of transmission oil, by virtue of the fact that the radial recess is oriented substantially in the direction of the centrifugal force.

In one particular embodiment of the transverse element according to the present invention, the radial recess formed in the contact surface extends over the entire radial dimension of the flank, so that it forms a continuous channel for transmission oil to flow through. More detailed embodiments and advantageous aspects of the invention will be discussed below with reference to the figures.

A further aspect of the present invention relates to the development of a possible way of also realising the radially running recess with the aid of the fine-blanking process which is already customary and is known, for example, from European patent application EP-A-1 158 204, i.e. advantageously at the same time as the transverse element is being formed from a base material. This means that according to the invention the punching process is unexpectedly able to provide a surface which has been formed during the punching, i.e. cut out, in this case the flank, of the transverse element with a recess or groove oriented transversely with respect to the punching or cutting direction. For this purpose, according to the invention, use is surprisingly made of the phenomenon which is known per se of punching "breakoff" also known as "Abriss" (technical jargon; German), specifically by designing the punching process in such a way that this phenomenon is at least locally boosted in such a manner that the result would normally be considered undesirable, i.e. would be rejected. The present invention has realised that this phenomenon known as punching breakoff can be advantageously deployed to create the desired radial recess. Therefore, the invention also relates to a punching process for forming a transverse element.

The required process setting to form the desired radial recess differs considerably from the settings which are customarily used during the punching of the flank and the other cut-out surfaces of a transverse element. The process setting relates in particular to the gap width used during punching, i.e. the clearance between a cutter and a die of a punching device. Although it is known per se, for example from EP-A-1 158 204, to vary the gap width along the periphery of the cutter and the die, which peripheries are more or less identical to that of the transverse element to be formed, the known variation is relatively slight and is used exclusively with a view to avoiding contact between a punching burr on a side face of the transverse element and the carrier. However, the present invention relates to a different surface of the transverse element, aimed to achieve a different effect and, moreover, proposes a different process setting, specifically a gap width which is greater than 10% of the thickness - i.e. the dimension of the material in the punching direction - of the material to be punched, preferably 15% ± 5%.

The said process setting has the additional advantage that on the opposite side of the contact surface, on account of the punching phenomenon known as contraction, a considerable and advantageous rounded section is formed where the flank merges into the respective main surface of the transverse element. Incorporating this phenomenon into the design of the flank of the transverse element has the favourable effect of shifting an effective point of engagement for a frictional force exerted on the flank by the sheave of a pulley further towards the centre of the flank and, moreover, of further increasing the size of a space which is present overall between the sheave and the transverse element.

In the text which follows, the invention will be explained in more detail, by way of example, with reference to a drawing, in which:
Figure 1 diagrammatically depicts a partially cut-away transmission in which the drive belt according to the invention is used;
Figure 2 shows a view in the longitudinal direction of the drive belt illustrating the contours of a main surface of a transverse element according to the invention, as well as a view of this element in the transverse or axial direction;
Figure 3 shows a perspective view of a transverse element according to the invention;
Figure 4 shows a cross section on line X-X in Figure 3;
Figure 5 diagrammatically depicts, in the form of a cross section, a fine-blanking process and the tool parts involved in this process;
Figure 6 shows a plan view of a punching die for punching a transverse element according to the prior art;
Figure 7 shows an enlarged view of part of the punching tool; and
Figure 8 shows two cross sections through the result of the fine-blanking process characterized by the gap width setting in the punching process.

Throughout the figures, corresponding components are denoted by identical reference numerals.

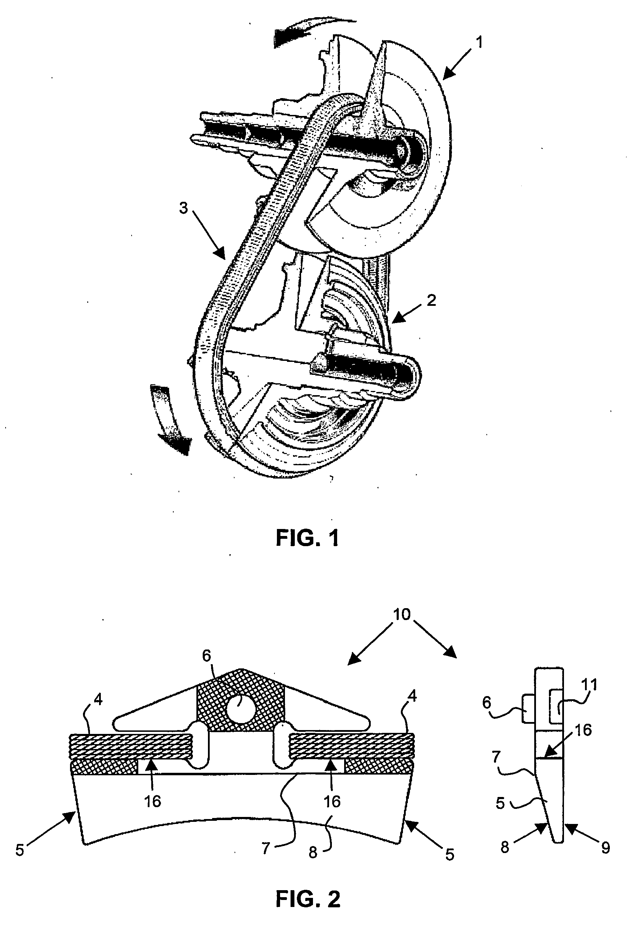

Figure 1 shows the main parts of a continuously variable transmission as used in the drive of, for example, passenger vehicles. The transmission is generally known per se and comprises at least a first pair of sheaves 1 and a second pair of sheaves 2, i.e. pulleys 1, 2, and a drive belt 3 accommodated between the sheaves of a pulley 1, 2. The sheaves of a pulley 1, 2 are substantially conical in form, and for each pulley 1, 2 at least one sheave can be displaced in the axial direction. For this purpose - not shown in the figure - electronically controllable activation means are generally incorporated in the transmission. Activation of these means can lead to an axial displacement of the displaceable sheaves and therefore to a change in the running radius R of the drive belt 3 in the radial direction. Moreover, the said activation causes the drive belt 3 to be clamped between the sheaves of the pulleys 1 and 2, so that a driving force can be transmitted between a pulley 1, 2 and the drive belt 3 with the aid of friction in the conical contact surface between them. The drive belt 3 and the pairs of sheaves 1 and 2 are generally made from metal. The drive belt 3 shown in Figure 1 comprises a pair of infinite carriers 4, which each comprise a set of nested, endless flat metal rings and which form a carrier 4 for a multiplicity of transverse elements 10 of the drive belt 3, the transverse elements 10 being accommodated in such a manner that they can move freely with respect to one another and along the periphery of the carriers 4, i.e. in the longitudinal direction.

Figure 2 shows a transverse element 10 of the drive belt 3 in a cross section oriented in the longitudinal direction and in an axial side view. In the cross-sectional view, the carrier 4 is shown in its intended orientation with respect to the transverse element 10 and more particularly a bearing surface 16 thereof. Furthermore, Figure 2 shows lateral contact surfaces 5, i.e. flanks 5, which are provided in a bottom part of the transverse element 10, with respect to the carrier 4, and are substantially axially oriented, intended for frictional contact with a pulley 1, 2, and a so-called tilting line 7, which forms a transition between two parts of the transverse element 10 with a different dimension in the said longitudinal direction. In a top part of the transverse element 10, with respect to the carrier 4, the transverse element is provided with a lug 6 and a notch 11 for orienting two adjacent transverse elements 10 in the drive belt 3 with respect to one another. Furthermore, the transverse element 10 is provided with two main surfaces 8 and 9, which are oriented transversely with respect to the longitudinal direction of the drive belt 3 and form a front and rear surface 8, 9 of the element 10, with the tilting line 7 being located in the front surface 8, the lateral contact surfaces 5 extending between these main surfaces 8 and 9. Furthermore, the transverse element 10 is provided with a radially oriented bearing surface for contact with the carriers 4.

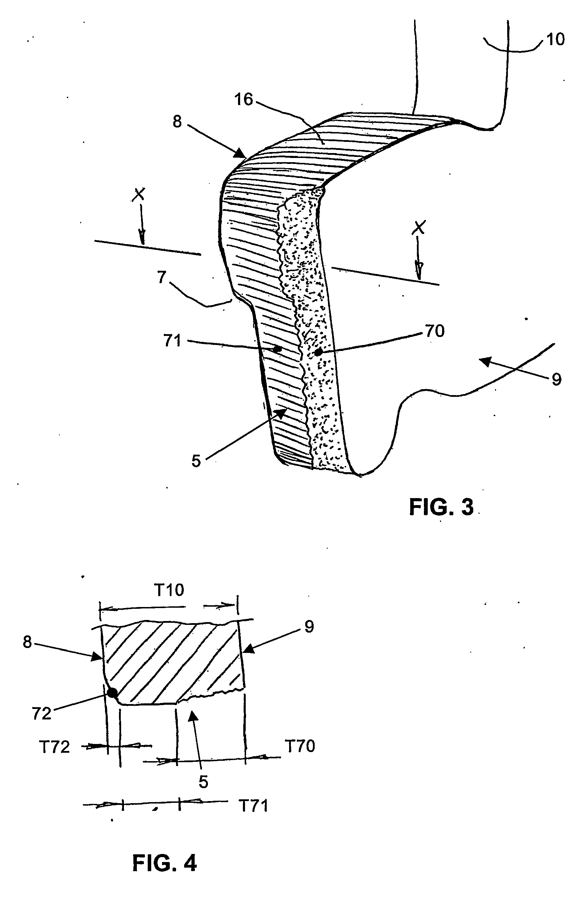

Figure 3 shows a perspective view of a relevant part of a transverse element 10 according to the invention, with a more or less groove-like recess 70, which extends substantially in the radial direction, preferably over the entire radial dimension, i.e. height, of the flank 5, being provided in the flank 5, i.e. the lateral contact surface 5. On account of its oil-discharging and oil-carrying function, the radial recess 70 is also referred to as a channel 70. In the present example, it is present in the vicinity of a side of the flank 5 that adjoins a main surface, specifically the rear surface 9, the recess 70 forming the transition between the two said surfaces 5 and 9. However, it is equally possible for the recess to be arranged elsewhere, for example centrally in the surface 5. The remaining, unrecessed part 71 of the contact surface 5 is preferably planar, i.e. designed without any profile, and is intended for frictional contact with the pulleys 1 and 2. Nevertheless, it is possible to provide the said part 71 with a number of grooves oriented in the longitudinal direction.

Figure 4 shows a view on line X-X in figure 3. The dimension T70 of the radial recess 70 in this example takes up approximately 50% of the total width T10 of the flank 5, i.e. the dimension in the longitudinal direction T10. According to the invention, the said dimension T70 is preferably in the range of 50% plus or minus 10%. In one particularly advantageous embodiment of the drive belt 3, the mean value of the said dimension T70 of the radial recess 70, over the multiplicity of transverse elements 10, is virtually equal to 50%. This produces a part 71 of the flank 5 which is intended for contact with a pulley 1, 2 and on the one hand is sufficiently large to absorb the frictional force and on the other hand is sufficiently small to allow transmission oil that is present on the surface of the said part 71 to be discharged to the radial recess in good time. Furthermore, according to the invention it may be advantageous for the transition between the said part 71 and the front surface 8 to be provided with a rounded section 72. The dimension T72 of the rounded section 72 in the said longitudinal direction is, however, preferably significantly smaller than the dimension T70 of the radial recess 70. It is preferable for the said dimension T72 of the rounded section 72 to be of the order of 15% plus or minus 5% of the total dimension in the said direction T10 of the flank 5. With these dimensions T70, T72 of the radial recess 70 and of the rounded section 72 with respect to the overall dimension T10 of the transverse element, a part 71, intended for contact with the pulleys 1, 2, of the flank 5 with a remaining dimension T71 is formed, which part 71 may advantageously be of planar design, i.e. there is no need for additional profiling specifically to be applied to it.

The abovementioned embodiments of the transverse element 10 according to the invention in which the radial recess 70 also forms the transition to a main surface 8, 9, preferably to the rear surface 9, have the major advantage that they can be produced with the aid of a known and customarily used punching process for forming, specifically cutting or punching, transverse elements 10 out of base material 52 which is generally in strip form. For this purpose, however, a suitable process setting should be selected, differing significantly from the settings which are customarily used.

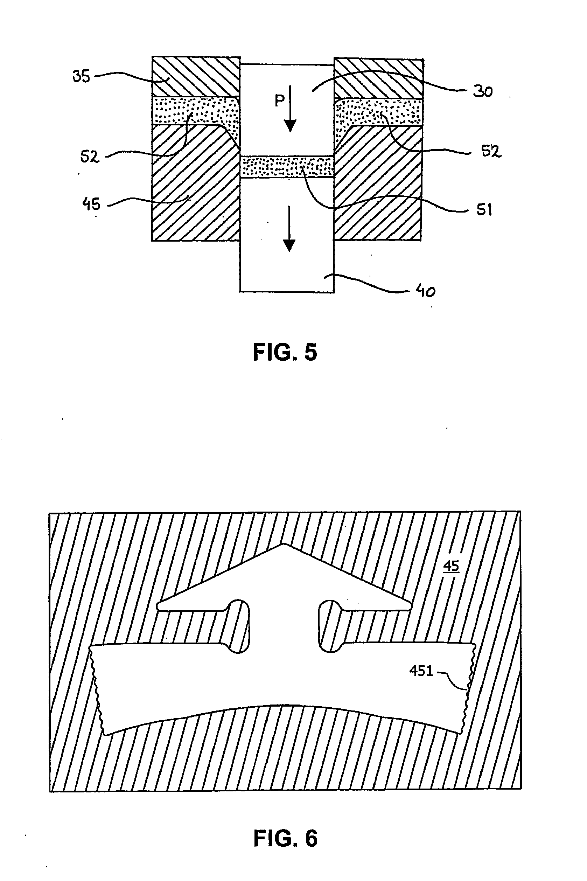

To illustrate the formation of a transverse element 10, Figure 5 diagrammatically depicts what is known as a fine-blanking process and device which is used to cut a product 51 to be formed, in this case the transverse element 10, out of base material 52 in sheet form. The known punching device comprises a die 45 and a guide plate 35, between which the material 52 to be punched is clamped. The device also comprises a cutter 30 and, in line with the latter, a support member 40. The periphery of both the cutter 30 and the support member 40 substantially corresponds to the periphery of the transverse elements 10 to be punched. A movement of the cutter 30 with respect to the die 45, indicated by arrow P, cuts out the product 51, with the support member 40 exerting a counter-force, but at the same time also following the movement of the cutter 30. In the case of the transverse element 10, the surfaces which are cut out during the punching process comprise at least the flanks 5 and the bearing surfaces 16. A free space or clearance, referred to as the cutting gap, is defined perpendicularly to the outer periphery of the cutter 30 and the inner periphery of the die 45. The extent of clearance, i.e. the gap width of the cutting gap, is generally relatively small, and in the case of the fine-blanking process is approximately 1 to at most 5 percent of a thickness of the material 52 to be punched.

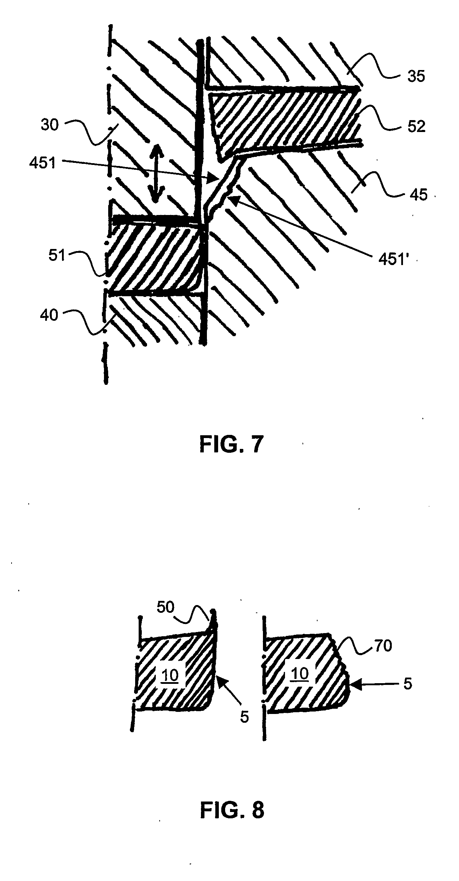

According to the present invention, by contrast, to obtain the functionally desired radial recess 70 having the desired dimension T70, the said gap width, at least where the flank 5 of the transverse element 10 is cut out of the material 52 to be punched, should be greater than 10% of a thickness dimension T10 of the material 52 to be punched, measured in the cutting or movement direction P of the cutter 30. This thickness T10 virtually corresponds to the total dimension T10 of the flank 5 in the said longitudinal direction when used in the drive belt 3. In particular, a gap width of 15% plus or minus 5% of the said thickness T10 is used, and more particularly the gap width is approximately equal to 15% of the said thickness. A setting of this type has the advantageous effect that the transverse element 10 on the one hand has a contraction or rounded section 72 between a first main surface 8 and the flank 5, with optimum dimensions for use in the drive belt 3, and on the other hand is provided with a breakoff, i.e. recess 70, which is located on the opposite side of the flank 5 and also has optimum dimensions for use in the drive belt 3. Between the said rounded section 72 and the recess 70 is located that part 71 of the flank 5 which is intended for frictional contact with the pulleys 1, 2 and is substantially planar, i.e. has been cut out with a relatively low roughness. Setting the punching process in this way results, at least as seen in the radial direction, in a recess which is substantially triangular in shape, with the maximum depth located at the transition to a main surface 8, 9 of the transverse element 10, more particularly the rear surface 9. A further advantage of this process is that the planar part 70 from the contact surface 5 also acquires any desired roughness on a micro-scale, which, if necessary, naturally promotes the intended discharge of oil. A further advantage of this way of producing transverse elements 10 is that in particular the die 45 will be subject to much less wear than previously, with the result that the die has to be replaced or reground less intensively or at least less often, as will be discussed in more detail below with reference to Figures 6 and 7.

Figure 6 illustrates a plan view of the die 45 as used for the known transverse element 10 with a profiled flank 5. The combination of a relatively narrow cutting gap with the correspondingly profiled edge part 451, for the profiled flank 5, of the die 45 means that the die is locally exposed to relatively high forces and therefore to relatively extensive wear, as indicated in more detail in the cross section through the punching tool shown in Figure 7 by reference numeral 451'. The wear to the edge part 451, 451' is in fact the crucial factor in determining the service life of the die 45, since the orientation of the flanks 5 of a transverse element 10 with respect to one another has to be extremely accurate. The provision in accordance with the invention of the recess 70 running in the radial direction over the flank 5 of the transverse element 10 means that a profiled flank 5 and edge part 451 of this type are no longer required. Consequently, the edge part 451, which forms the flank 5 of a transverse element 10, of the die 45 can advantageously be planar, i.e. straight in plan view, and will no longer be subject to increased wear compared to other edge parts thereof.

Finally, Figure 8 once again illustrates the influence of the dimensioning of the cutting gap on the result of punching. The left-hand side of Figure 8 shows, in cross section, an edge 5 of a product obtained using the fine-blanking process, while the right-hand side shows an edge 5 of product which has been punched in accordance with the present invention using the relatively large cutting gap. Specifically, the figure shows a cross-sectional view through the flanks 5 of a transverse element 10. With the fine-blanking process, a relatively narrow cutting gap is used, and consequently little or no breakoff occurs and the flank 5 is virtually planar in the cutting direction and ends in a burr 50. If, in accordance with the present invention, a relatively large cutting gap is used, the breakoff 70 is formed, extending in the radial direction over the flank 5 and forming the desired radially oriented discharge channel 70 for transmission oil.

In addition to what has been described above, the invention also relates to all the details shown in the figures, at least to the extent that they can be immediately and unambiguously understood by a person skilled in the art, and to everything that is described in the set of claims which follows.

## Claims

1. Drive belt (3) in particular for use in a continuously variable transmission, such as for passenger cars, having two pairs of substantially conical sheaves (1, 2), between which the drive belt (3) is accommodated with clamping forces being applied, which drive belt (3) comprises an infinite carrier (4) for a multiplicity of transverse elements (10), along which carrier (4) the transverse elements (10) are accommodated in such a manner that they can move freely at least in the longitudinal direction of the drive belt (3), for which purpose the transverse elements (10) are provided with a recess, an edge of which forms a substantially radially oriented bearing surface (16) for the carrier (4), which transverse elements (10) furthermore comprise main surfaces (8, 9) oriented transversely with respect to the longitudinal direction of the carrier (4), and lateral contact surfaces (5), which are oriented substantially in the said longitudinal direction and are directed axially, for contact with the pairs of sheaves (1, 2), known as the flanks (5), whereby at least one such lateral contact surface (5) is provided with a recess (70), at least suitable for radially discharging and/or supplying a lubricant and/or coolant when the transverse element (10) is accommodated between the sheaves of a pair of sheaves (1, 2), the largest dimension of which is substantially radially oriented and which forms a radially running channel in the lateral contact surface (5) extending over the entire height of the lateral contact surface (5) forming a channel between a pair of sheaves (1, 2) and the belt (3) through which medium can flow continuously in the radial direction during operation, the radial recess (70) being located on one side of the lateral contact surface (5) forming the transition from the respective lateral contact surface (5) to a main surface (9) of the transverse element (10), **characterised in that** the transverse elements (10) are further provided with a rounded section (72) that forms the transition from the lateral contact surface (5) to the respective other main surface (8), whereby the radial recess (70), as seen in cross section, has a dimension in the said longitudinal direction (T70), which is considerably larger than a dimension in this longitudinal direction (T72) of the rounded section (72) and which, at least when taken as an average over the multiplicity of transverse elements (10) of the belt (3), is approximately half the total dimension of the lateral contact surface (5) in this direction (T10).

2. Drive belt (3) according to Claim 1, **characterized in that** the main surface (9) to which the radial recess (70) forms a transition is opposite from the main surface (8) in which what is known as a tilting line (7) of the transverse element (10) is defined, which tilting line (7) forms a transition between two parts of the transverse element (10) with different dimensions in the said longitudinal direction (T10).

3. Drive belt (3) according to one of the preceding claims, **characterized in that** a remaining, unrecessed part (71) of the lateral contact surface (5), which is intended for contact with a sheave of a pair of sheaves (1, 2) is formed substantially planar without any profile.

4. Drive belt (3) according to one of the preceding claims, **characterized in that** a remaining, unrecessed part (71) of the lateral contact surface (5), which is intended for contact with a sheave of a pair of sheaves (1, 2), covers at least 40% and at most 60% of a projected total surface area of the lateral contact surface (5).

5. Drive belt (3) according to one of the preceding claims, **characterized in that** the radial recess (70), in the said longitudinal direction, has a dimension (T70) of approximately 1 mm, and in the lateral or axial direction of the drive belt (3) has a maximum dimension, i.e. depth, of 0.2 mm plus or minus 0.1 mm.

6. Drive belt (3) according to one or more of the preceding claims, **characterized in that** at least the majority of the multiplicity of transverse elements (10) are provided with the radial recess (70).

7. Punching process using a punching device to form a transverse element (10) for a drive belt (3) according to any one of the preceding claims, in which a gap width of a cutting gap, i.e. a clearance between a cutter (30) and a die (45) of the punching device, is adapted to obtain punched transverse elements (10) of which at least one lateral contact surface (5) is broken off, the broken-off section (70) of the said surface (5) covering approximately 50% of the total dimension of the said surface (5).

8. Punching process using a punching device to form a transverse element (10) for a drive belt (3) according to any one of the preceding claims, in which a gap width of a cutting gap, i.e. a clearance between a cutter (30) and a die (45) of the punching device, at least where they cut the lateral contact surface (5) of the transverse element (10) out of the material (52) to be punched, is greater than 10% of the dimension (T10) of the material (52) to be punched in the cutting or movement direction of the cutter (30), and is preferably in the region of 15% plus or minus 5% of this dimension (T10).

## Patentansprüche

1. Treibriemen (3), insbesondere zur Verwendung in einem stufenlosen Getriebe, wie zum Beispiel für PKWs, mit zwei Paaren im Wesentlichen konischer Rillenscheiben (1, 2), zwischen denen der Treibriemen (3) unter Anlegen von Klemmkräften untergebracht ist, wobei der Treibriemen (3) einen Endlosträger (4) für eine Vielzahl von Querelementen (10) umfasst, wobei entlang dem Endlosträger (4) die Querelemente (10) so untergebracht sind, dass sie sich zumindest in Längsrichtung des Treibriemens (3) frei bewegen können, wozu die Querelemente (10) mit einer Aussparung vorgesehen sind, von der ein Rand eine im Wesentlichen radial ausgerichtete Lagerfläche (16) für den Träger (4) bildet, wobei die Querelemente (10) des Weiteren quer zur Längsrichtung des Trägers (4) ausgerichtete Hauptflächen (8, 9) und im Wesentlichen in der Längsrichtung ausgerichtete und als die Flanken (5) bekannte, axial gerichtete laterale Kontaktflächen (5) zum Kontakt mit den Paaren Rillenscheiben (1, 2) umfassen, wobei mindestens eine solche laterale Kontaktfläche (5) mit einer Aussparung (70) versehen ist, die sich zumindest zum radialen Abführen und/oder Zuführen eines Schmiermittels und/oder eines Kühlmittels eignet, wenn das Querelement (10) zwischen den Rillenscheiben eines Paars Rillenscheiben (1, 2) untergebracht ist, deren größte Abmessung im Wesentlichen radial ausgerichtet ist und die einen radial verlaufenden Kanal in der lateralen Kontaktfläche (5) bildet, der sich über die gesamte Höhe der lateralen Kontaktfläche (5) erstreckt und einen Kanal zwischen einem Paar Rillenscheiben (1, 2) und dem Riemen (3) bildet, durch den während des Betriebs Medium kontinuierlich in Radialrichtung strömen kann, wobei sich die radiale Aussparung (70) auf einer Seite der lateralen Kontaktfläche (5) befindet und den Übergang von der jeweiligen lateralen Kontaktfläche (5) zu einer Hauptfläche (9) des Querelements (10) bildet, **dadurch gekennzeichnet, dass** die Querelemente (10) weiterhin mit einem abgerundeten Abschnitt (72) versehen sind, der den Übergang von der lateralen Kontaktfläche (5) zur jeweils anderen Hauptfläche (8) bildet, wobei die radiale Aussparung (70), im Querschnitt gesehen, eine Abmessung in der Längsrichtung (T70) aufweist, die beträchtlich größer ist als eine Abmessung des abgerundeten Abschnitts (72) in dieser Längsrichtung (T72) und die, zumindest als Durchschnitt über die Vielzahl von Querelementen (10) des Riemens (3), ungefähr die Hälfte der Gesamtabmessung der lateralen Kontaktfläche (5) in dieser Richtung (T10) beträgt.

2. Treibriemen (3) nach Anspruch 1, **dadurch gekennzeichnet, dass** die Hauptfläche (9), zu der die radiale Aussparung (70) einen Übergang bildet, gegenüber der Hauptfläche (8) liegt, in der eine so genannte Neigungslinie (7) des Querelements (10) definiert ist, wobei die Neigungslinie (7) einen Übergang zwischen zwei Teilen des Querelements (10) mit unterschiedlichen Abmessungen in der Längsrichtung (T10) bildet.

3. Treibriemen (3) nach einem der vorhergehenden Ansprüche, **dadurch gekennzeichnet, dass** ein verbleibender, nicht ausgesparter Teil (71) der lateralen Kontaktfläche (5), der zum Kontakt mit einer Rillenscheibe eines Paars Rillenscheiben (1, 2) bestimmt ist, im Wesentlichen planar ohne irgendein Profil ausgebildet ist.

4. Treibriemen (3) nach einem der vorhergehenden Ansprüche, **dadurch gekennzeichnet, dass** ein verbleibender, nicht ausgesparter Teil (71) der lateralen Kontaktfläche (5), der zum Kontakt mit einer Rillenscheibe eines Paars Rillenscheiben (1, 2) bestimmt ist, mindestens 40% und höchstens 60% einer projizierten Gesamtoberfläche der lateralen Kontaktfläche (5) umfasst.

5. Treibriemen (3) nach einem der vorhergehenden Ansprüche, **dadurch gekennzeichnet, dass** die radiale Aussparung (70) in der Längsrichtung eine Abmessung (T70) von ca. 1 mm und in der lateralen oder axialen Richtung des Treibriemens (3) eine Maximalabmessung, das heißt Tiefe von 0,2 mm plus oder minus 0,1 mm aufweist.

6. Treibriemen (3) nach einem oder mehreren der vorhergehenden Ansprüche, **dadurch gekennzeichnet, dass** zumindest die Mehrzahl der Vielzahl von Querelementen (10) mit der radialen Aussparung (70) versehen ist.

7. Stanzverfahren unter Verwendung einer Stanzvorrichtung zur Herstellung eines Querelements (10) für einen Treibriemen (3) nach einem der vorhergehenden Ansprüche, bei dem eine Spaltbreite eines Schneidspalts, das heißt ein Abstand zwischen einem Schneidwerkzeug (30) und einer Matrize (45) der Stanzvorrichtung, dazu ausgelegt ist, gestanzte Querelemente (10) zu erhalten, von denen mindestens eine laterale Kontaktfläche (5) abgebrochen ist, wobei der abgebrochene Abschnitt (70) der Fläche (5) ungefähr 50% der Gesamtabmessung der Fläche (5) umfasst.

8. Stanzverfahren unter Verwendung einer Stanzvorrichtung zur Herstellung eines Querelements (10) für einen Treibriemen (3) nach einem der vorhergehenden Ansprüche, wobei eine Spaltbreite eines Schneidspalts, das heißt ein Abstand zwischen einem Schneidwerkzeug (30) und einer Matrize (45) der Stanzvorrichtung, zumindest, wo sie die laterale Kontaktfläche (5) des Querelements (10) aus dem zu stanzenden Material (52) ausschneiden, größer als 10% der Abmessung (T10) des zu stanzenden Materials (52) in Schneid- oder Bewegungsrichtung des Schneidwerkzeugs (30) ist und vorzugsweise in einem Bereich von 15% plus oder minus 5% dieser Abmessung (T10) liegt.

## Revendications

1. Courroie d'entraînement (3) destinée en particulier à une utilisation dans une transmission à variation continue, comme pour des voitures de tourisme, munie de deux paires de poulies (1, 2) sensiblement coniques entre lesquelles la courroie d'entraînement (3) est logée avec application d'efforts de serrage, laquelle courroie d'entraînement (3) comporte une porteuse sans fin (4) pour une multiplicité d'éléments transversaux (10), les éléments transversaux (10) étant logés le long de ladite porteuse (4) de telle manière qu'ils puissent se déplacer librement au moins dans la direction longitudinale de la courroie d'entraînement (3), les éléments transversaux (10) étant pourvus à cet effet d'un évidement dont un des bords forme une portée (16) orientée sensiblement radialement pour la porteuse (4), lesdits éléments transversaux (10) comportant en outre des surfaces principales (8, 9) orientées transversalement par rapport à la direction longitudinale de la porteuse (4) et des surfaces latérales de contact (5) orientées sensiblement dans ladite direction longitudinale et dirigées axialement, destinées à un contact avec les paires de poulies (1, 2), appelées flancs (5), au moins l'une de ces surfaces latérales de contact (5) étant pourvue d'un évidement (70), au moins approprié pour évacuer et/ou amener radialement un lubrifiant et/ou un agent de refroidissement lorsque l'élément transversal (10) est logé entre les poulies d'une paire de poulies (1, 2), dont la plus grande dimension est orientée sensiblement radialement et qui forme un canal dirigé radialement dans la surface latérale de contact (5) s'étendant sur toute la hauteur de la surface latérale de contact (5) en formant un canal entre une paire de poulies (1, 2) et la courroie (3) à travers lequel une substance peut s'écouler continûment dans la direction radiale pendant le fonctionnement, l'évidement radial (70) étant situé d'un côté de la surface latérale de contact (5) formant la transition de la surface latérale de contact respective (5) à une surface principale (9) de l'élément transversal (10), **caractérisée en ce que** les éléments transversaux (10) sont en outre pourvus d'une section arrondie (72) qui forme la transition de la surface latérale de contact (5) à l'autre surface principale respective (8), l'évidement radial (70) présentant, vu en section droite, une dimension dans ladite direction longitudinale (T70) considérablement plus grande qu'une dimension dans cette direction longitudinale (T72) de la section arrondie (72) et valant, du moins lorsqu'elle est prise en moyenne sur la multiplicité d'éléments transversaux (10) de la courroie (3), approximativement la moitié de la dimension totale de la surface latérale de contact (5) dans cette direction (T10).

2. Courroie d'entraînement (3) selon la revendication 1, **caractérisée en ce que** la surface principale (9) vers laquelle l'évidement radial (70) forme une transition est opposée à la surface principale (8) sur laquelle est défini ce qui est appelé la ligne de basculement (7) de l'élément transversal (10), laquelle ligne de basculement (7) forme une transition entre deux parties de l'élément transversal (10) présentant des dimensions différentes dans ladite direction longitudinale (T10).

3. Courroie d'entraînement (3) selon l'une des revendications précédentes, **caractérisée en ce qu'**une partie restante non évidée (71) de la surface latérale de contact (5), destinée à un contact avec une poulie d'une paire de poulies (1, 2), est formée de façon sensiblement plane sans aucun profil.

4. Courroie d'entraînement (3) selon l'une des revendications précédentes, **caractérisée en ce qu'**une partie restante non évidée (71) de la surface latérale de contact (5), destinée à un contact avec une poulie d'une paire de poulies (1, 2), couvre au moins 40% et au plus 60% d'une aire totale de surface projetée de la surface latérale de contact (5).

5. Courroie d'entraînement (3) selon l'une des revendications précédentes, **caractérisée en ce que** l'évidement radial (70), dans ladite direction longitudinale, présente une dimension (T70) d'approximativement 1 mm et, dans la direction latérale ou axiale de la courroie d'entraînement (3), présente une dimension, c'est-à-dire une profondeur, maximale de 0,2 mm plus ou moins 0,1 mm.

6. Courroie d'entraînement (3) selon une ou plusieurs des revendications précédentes, **caractérisée en ce qu'**au moins la majorité de la multiplicité d'éléments transversaux (10) est pourvue de l'évidement radial (70).

7. Processus de poinçonnage utilisant un dispositif de poinçonnage pour former un élément transversal (10) pour une courroie d'entraînement (3) selon l'une quelconque des revendications précédentes, dans lequel une largeur d'intervalle d'un intervalle de coupe, c'est-à-dire un jeu entre un poinçon (30) et une matrice (45) du dispositif de poinçonnage, est adaptée pour obtenir des éléments transversaux (10) poinçonnés dont au moins une surface latérale de contact (5) est coupée, la section coupée (70) de ladite surface (5) couvrant approximativement 50 % de la dimension totale de ladite surface (5).

8. Processus de poinçonnage utilisant un dispositif de poinçonnage pour former un élément transversal (10) pour une courroie d'entraînement (3) selon l'une quelconque des revendications précédentes, dans lequel une largeur d'intervalle d'un intervalle de coupe, c'est-à-dire un jeu entre un poinçon (30) et une matrice (45) du dispositif de poinçonnage, au moins là où ils séparent la surface latérale de contact (5) de l'élément transversal (10) du matériau (52) à poinçonner, est supérieure à 10% de la dimension (T10) du matériau (52) à poinçonner dans la direction de coupe ou de mouvement du poinçon (30), et est de préférence au voisinage de 15% plus ou moins 5% de cette dimension (T10).
